# EUROPEAN PATENT APPLICATION

(11) **EP 1 207 653 A1**
(43) Date of publication of application: **22.05.2002**
(21) Application number: 00440300.2
(22) Date of filing: 20.11.2000
(51) Int. Cl.: H04L 12/28

(54) **System, terminal, network-entity and method for network coupling**

(71) Applicant: ALCATEL, 75008 Paris (FR)
(72) Inventor: Chantrain, Dominique, 2650 Edegem (BE); Handekyn, Koen, 900 Gent (BE); Daenen, Koen, 3150 Haacht (BE); Vanderstraeten, Hans, 9280 Lebbeke (BE); Vermeulen, Christophe, 4690 Roclenge-Sur-Geer (BE)
(74) Representative: Rausch, Gabriele, Dr.

(57) **Abstract**

Known systems couple terminals via network-entities (switches, bridges, routers) to an Internet/Intranet by, at said terminals, generating first codes for activating couplings from terminals via network-entities to said Internet/Intranet, and deactivate at least a part of said coupling by, at said terminals and/or at said network-entities, generating second codes, with said network-entities detecting said first and second codes. To introduce call-on-hold features and session-park features, said systems are provided with memories for storing coupling-information in relation to at least a part of said second codes, which memories generate said coupling-information in response to third codes. Preferably, second codes will comprise subcodes indicating a deactivation-type (call-on-hold or session-park), and in addition to said first and third codes, a fourth code is generated for security reasons (encryption).

## Description

The invention relates to a system comprising a terminal and a network-entity for coupling said terminal to an int(e)r(a)net, which terminal comprises a terminal-generator for generating a first code for activating a coupling to said int(e)r(a)net via said network-entity, which system comprises a system-generator for generating a second code for deactivating at least a part of said coupling, and which network-entity comprises a detector for detecting said first code and said second code.

Such a system is known in general, with said terminal for example being a wired (analog, digital, ISDN etc.) or wireless (cordless: DECT etc. or mobile: GSM, CTS, UMTS etc.) terminal like a telephone, a pc or a screenphone etc., with said network-entity for example being (a part of) a switch or a router or a bridge etc., and with said int(e)r(a)net for example being (a part of) an Internet or Intranet etc. Said first code comprises for example a telephone number and an access number and a service number, and said coupling for example corresponds with a wired (analog, digital, ISDN, xDSL etc.) or wireless or mobile (WAP, UMTS etc.) IP (Internet Protocol) connection; for example in case of a so-called always-on IP connection said first code no longer needs to comprise said telephone number but will just comprise said service number and possibly said access number due to said telephone number and possibly said access number then being superfluous. For example in case of said system-generator corresponding with said terminal-generator, said second code comprises for example a so-called off-line instruction for finishing an on-line session. For example in case of said system-generator corresponding with a network-entity-generator (for example in case of said always-on IP connection) said second code no longer comprises such an off-line instruction due to always being on-line, but it for example will comprise a kind of an end-of-service-provider instruction to finish communication with a service provider, thereby returning to (always-on) communication with an access provider, and/or it for example will comprise a timing instruction for indicating an elapse of a time-interval.

Such a system is disadvantageous, inter alia, due to providing user possibilities insufficiently.

It is an object of the invention, inter alia, to provide a system described in the preamble, which provides more user possibilities.

Thereto, the system according to the invention is characterised in that said system comprises a memory to be coupled to said detector for storing coupling-information in relation to at least a part of said second code and for generating at least a part of said coupling-information in response to at least a third code.

By introducing the memory (located in the terminal or located in the network-entity or located partly in the terminal and partly in the network-entity), storage of coupling-information (for example a destination like a URL or an IP address and/or for example content information exchanged via said coupling and/or for example a history of visited sites or links used and/or for example an expected duration of a deactivation) in relation to at least a part of said second code (possibly further related to for example said first code) becomes possible. In response to at least said third code (and possibly further in response to for example (a part of) said first code and/or second code), at least a part of said coupling-information is generated, which offers many more user possibilities.

The invention is based on the insight, inter alia, that codes may correspond to asking questions, whereby a memory may be used to store responses to these questions.

The invention solves the problem, inter alia, of providing more user possibilities, by introducing the storage of coupling-information in relation to at least a part of said second code and the generation of the third code.

Said detector in said network-entity may be in one part for detecting first and second codes and may comprise a first subdetector for detecting first codes and a second subdetector for detecting second codes. Said third code may originate from the same terminal (generated via the same terminal-generator), but may further originate from another terminal (generated via another terminal-generator), in which case for the generation of (the part of) the coupling-information said first code and/or second code will be required, unless said third code already comprises corresponding code information.

A first embodiment of the system according to the invention is characterised in that said second code comprises a subcode indicating a deactivation-type.

By introducing one or more subcodes in said second code, the deactivation-type is indicated, with for example a first subcode indicating a call-on-hold situation (short interruption) and a second subcode indicating a session-park situation (storage of history).

A second embodiment of the system according to the invention is characterised in that in addition to at least one of said first and third codes a fourth code is generated for security reasons.

By using said fourth code, security is introduced, for example by encrypting certain codes and/or certain information in dependence of said fourth code.

Each one of said (sub)codes mentioned is generated by a user, and/or generated in response to a user action, and/or generated automatically etc.

The invention further relates to a terminal for use in a system comprising said terminal and a network-entity for coupling said terminal to an int(e)r(a)net, which terminal comprises a terminal-generator for generating a first code for activating a coupling to said int(e)r(a)net via said network-entity, which system comprises a system-generator for generating a second code for deactivating at least a part of said coupling, and which network-entity comprises a detector for detecting said first code and said second code.

The terminal according to the invention is characterised in that said terminal comprises a memory for storing coupling-information in relation to at least a part of said second code and for generating at least a part of said coupling-information in response to at least a third code.

A first embodiment of the terminal according to the invention is characterised in that said second code comprises a subcode indicating a deactivation-type.

A second embodiment of the terminal according to the invention is characterised in that in addition to at least one of said first and third codes a fourth code is generated for security reasons.

The invention yet further relates to a network-entity for use in a system comprising a terminal and said network-entity for coupling said terminal to an int(e)r(a)net, which terminal comprises a terminal-generator for generating a first code for activating a coupling to said int(e)r(a)net via said network-entity, which system comprises a system-generator for generating a second code for deactivating at least a part of said coupling, and which network-entity comprises a detector for detecting said first code and said second code.

The network-entity according to the invention is characterised in that said network-entity comprises a memory for storing coupling-information in relation to at least a part of said second code and for generating at least a part of said coupling-information in response to at least a third code.

A first embodiment of the network-entity according to the invention is characterised in that said second code comprises a subcode indicating a deactivation-type.

A second embodiment of the network-entity according to the invention is characterised in that in addition to at least one of said first and third codes a fourth code is generated for security reasons.

The invention also relates to a method for coupling a terminal via a network-entity to an int(e)r(a)net, which method comprises the steps of generating a first code for activating a coupling from said terminal via said network-entity to said int(e)r(a)net and of generating a second code for deactivating at least a part of said coupling and of detecting said first code and said second code.

The method according to the invention is characterised in that said method comprises the further steps of storing coupling-information in relation to at least a part of said second code and of generating at least a part of said coupling-information in response to at least a third code.

Embodiments of the method according to the invention correspond with embodiments of the system according to the invention.

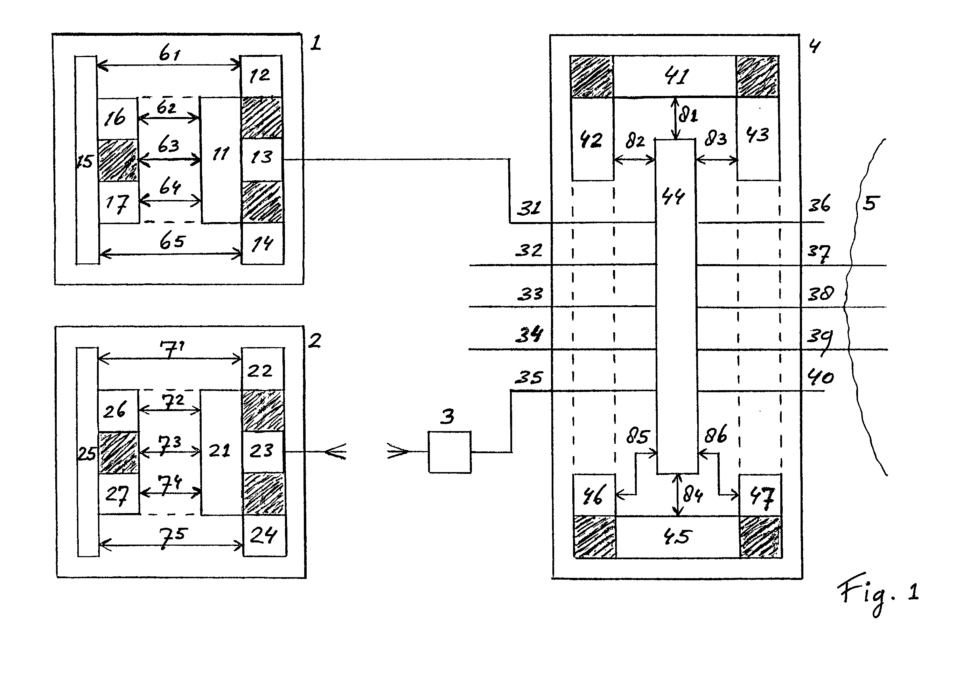

The invention will be further explained at the hand of an embodiment described with respect to drawings, whereby
figure 1 discloses a system according to the invention comprising a wired terminal 1 according to the invention and a wireless (cordless or mobile) terminal 2 according to the invention and a network-entity 4 according to the invention.

Terminal 1 according to the invention as shown in figure 1 comprises a processor 11 coupled to a decoder 12 and to a transceiver 13 and to a coder 14, and comprises a man-machine-interface (for example a mouse, a keyboard, a display, a loudspeaker, a microphone etc.) or mmi 15 coupled to a memory 16 and to a terminal-generator 17. Decoder 12 is coupled via a connection 61 to mmi 15, processor 11 is coupled via a connection 62 to memory 16 and via a connection 63 to mmi 15 and via a connection 64 to terminal-generator 17, and coder 14 is coupled via a connection 65 to mmi 15. Transceiver 13 is coupled via a connection 31 to a network-entity or switch 4.

Terminal 2 according to the invention as shown in figure 1 comprises a processor 21 coupled to a decoder 22 and to a transceiver 23 and to a coder 24, and comprises a man-machine-interface (for example a mouse, a keyboard, a display, a loudspeaker, a microphone etc.) or mmi 25 coupled to a memory 26 and to a terminal-generator 27. Decoder 22 is coupled via a connection 71 to mmi 25, processor 21 is coupled via a connection 72 to memory 26 and via a connection 73 to mmi 25 and via a connection 74 to terminal-generator 27, and coder 24 is coupled via a connection 75 to mmi 25. Transceiver 23 is coupled via a basestation 3 and a connection 35 to said network-entity or switch 4.

Network-entity 4 according to the invention as shown in figure 1 comprises a processor 41 coupled to a detector 42 and to a switch-generator 43, and comprises a coupler 44 and a memory 45 coupled to a first part 46 and to a second part 47. Processor 41 is coupled via a connection 81 to coupler 44, detector 42 is coupled via a connection 82 to coupler 44, and switch-generator 43 is coupled via a connection 83 to coupler 44. Coupler 44 is coupled to said connections 31 and 35, and is further coupled to connections 32-34 and 36-40, whereby connections 37-39 flow into int(e)r(a)net 5. Memory 45 is coupled via a connection 84 to coupler 44, first part 46 is coupled via a connection 85 to coupler 44, and second part 47 is coupled via a connection 86 to coupler 44.

Terminals 1 and 2 according to the invention and switch 4 according to the invention as shown in figure 1 function as follows.

According to a first embodiment, a user operating terminal 1 decides to go surfing the web. Thereto, via mmi 15, user actions (one or more mouse clicks and/or one or more key signals) are converted into instructions which, possibly via connection 63, processor 11 and connection 64, are supplied to terminal-generator 17. In response, terminal-generator 17 generates a first code (for example comprising a telephone number and an access number and a service number) which via mmi 15 and connection 65 is supplied to coder 14. Said first code is coded and via transceiver 13 and connection 31 supplied to switch 4. In switch 4, the first code flows via coupler 44 to detector 42 via connection 81 for detection purposes and to memory 45 via connection 84 for storage purposes (thereby storing for example in a table memory per certain coupling and/or per certain user and/or per certain terminal coupling information like one or more parts of said first code), all under control of processor 41, both possibly after a decoding process. In response to detection, at least a part of said first code, possibly after a coding process, is sent via coupler 44 and for example connection 37 to an internet for surfing purposes. As a result, said user is visiting a website defined by (a part of) said first code.

Then said user decides to visit his intranet for example, thereby realising that later said user will wish to return to said internet website. Thereto, via mmi 15, user actions (one or more mouse clicks and/or one or more key signals) are converted into instructions which, possibly via connection 63, processor 11 and connection 64, are supplied to terminal-generator 17. In response, terminal-generator 17 generates a second code (for example indicating a call-on-hold situation and possibly for example further comprising a further access number and a further service number) which via mmi 15 and connection 65 is supplied to coder 14. Said second code is coded and via transceiver 13 and connection 31 supplied to switch 4. In switch 4, the second code flows via coupler 44 to detector 42 via connection 81 for detection purposes and to memory 45 via connection 84 for storage purposes (thereby storing for example in a table memory per certain coupling and/or per certain user and/or per certain terminal coupling information like one or more parts of said first code together with one or more parts of said second code like a call-on-hold indicator), all under control of processor 41, both possibly after a decoding process. In response to detection, the visiting of said internet website via connection 37 is interrupted, and at least a part of said second code, possibly after a coding process, is sent via coupler 44 and for example connection 39 to an intranet for getting company information. As a result, said user is visiting an intranet site defined by (a part of) said second code.

Then said user decides to return to said internet website. Thereto, via mmi 15, user actions (one or more mouse clicks and/or one or more key signals) are converted into instructions which, possibly via connection 63, processor 11 and connection 64, are supplied to terminal-generator 17. In response, terminal-generator 17 generates a third code (for example indicating to reverse said call-on-hold situation) which via mmi 15 and connection 65 is supplied to coder 14. Said third code is coded and via transceiver 13 and connection 31 supplied to switch 4. In switch 4, the third code flows via coupler 44 to detector 42 via connection 81 for detection purposes and to memory 45 via connection 84 for storage purposes, all under control of processor 41, both possibly after a decoding process. In response to detection, the visiting of said intranet site via connection 39 is interrupted and/or finished, and at least a part of said coupling information, possibly after a coding process, is sent via coupler 44 and for example connection 37 to said internet for surfing purposes. As a result, said user has returned to visiting said website (defined by (a part of) said first code).

According to a first alternative to said first embodiment, a user operating terminal 1 decides to go surfing the web. Thereto, via mmi 15, user actions (one or more mouse clicks and/or one or more key signals) are converted into instructions which, possibly via connection 63, processor 11 and connection 64, are supplied to terminal-generator 17. In response, terminal-generator 17 generates a first code (for example comprising a telephone number and an access number and a service number) which via mmi 15 and connection 65 is supplied to coder 14. Said first code is coded and via transceiver 13 and connection 31 supplied to switch 4. In switch 4, the first code flows via coupler 44 to detector 42 via connection 81 for detection purposes and to memory 45 via connection 84 for storage purposes (thereby storing for example in a table memory per certain coupling and/or per certain user and/or per certain terminal coupling information like one or more parts of said first code), all under control of processor 41, both possibly after a decoding process. In response to detection, at least a part of said first code, possibly after a coding process, is sent via coupler 44 and for example connection 37 to an internet for surfing purposes. As a result, said user is visiting a website defined by (a part of) said first code.

Then said user decides to leave terminal 1, for example due to going to travel, thereby realising that while being mobile, said user will wish to return to said internet website. Thereto, via mmi 15, user actions (one or more mouse clicks and/or one or more key signals) are converted into instructions which, possibly via connection 63, processor 11 and connection 64, are supplied to terminal-generator 17. In response, terminal-generator 17 generates a second code (for example indicating a call-on-hold situation) which via mmi 15 and connection 65 is supplied to coder 14. Said second code is coded and via transceiver 13 and connection 31 supplied to switch 4. In switch 4, the second code flows via coupler 44 to detector 42 via connection 81 for detection purposes and to memory 45 via connection 84 for storage purposes (thereby storing for example in a table memory per certain coupling and/or per certain user and/or per certain terminal coupling information like one or more parts of said first code together with one or more parts of said second code like a call-on-hold indicator), all under control of processor 41, both possibly after a decoding process. In response to detection, the visiting of said internet website via connection 37 is interrupted.

Then said user activates his mobile terminal 2 and while being mobile, said user decides to return to said internet website. Thereto, via mmi 25, user actions (one or more mouse clicks and/or one or more key signals) are converted into instructions which, possibly via connection 73, processor 21 and connection 74, are supplied to terminal-generator 27. In response, terminal-generator 27 generates a third code (for example indicating to reverse said call-on-hold situation) which via mmi 25 and connection 75 is supplied to coder 24. Said third code is coded and via transceiver 23 and base station 3 and connection 35 supplied to switch 4. In switch 4, the third code flows via coupler 44 to detector 42 via connection 81 for detection purposes and to memory 45 via connection 84 for storage purposes, all under control of processor 41, both possibly after a decoding process. In response to detection, at least a part of said coupling information, possibly after a coding process, is sent via coupler 44 and for example connection 37 to said internet for surfing purposes. As a result, said user, but now via his mobile terminal 2, has returned to visiting said website (defined by (a part of) said first code).

According to a second alternative to said first embodiment, a user operating terminal 1 decides to go surfing the web. Thereto, via mmi 15, user actions (one or more mouse clicks and/or one or more key signals) are converted into instructions which, possibly via connection 63, processor 11 and connection 64, are supplied to terminal-generator 17. In response, terminal-generator 17 generates a first code (for example comprising a telephone number and an access number and a service number) which first code is supplied to and stored in memory 16 (thereby storing for example in a table memory per certain coupling and/or per certain user coupling information like one or more parts of said first code) and which first code via mmi 15 and connection 65 is supplied to coder 14. Said first code is coded and via transceiver 13 and connection 31 supplied to switch 4. In switch 4, the first code flows via coupler 44 to detector 42 via connection 81 for detection purposes and to memory 45 via connection 84 for storage purposes, all under control of processor 41, both possibly after a decoding process. In response to detection, at least a part of said first code, possibly after a coding process, is sent via coupler 44 and for example connection 37 to an internet for surfing purposes. As a result, said user is visiting a website defined by (a part of) said first code.

Then said user decides to visit his intranet for example, thereby realising that later said user will wish to return to said internet website. Thereto, via mmi 15, user actions (one or more mouse clicks and/or one or more key signals) are converted into instructions which, possibly via connection 63, processor 11 and connection 64, are supplied to terminal-generator 17. In response, terminal-generator 17 generates a second code (for example indicating a call-on-hold situation and possibly for example further comprising a further access number and a further service number) which second code is supplied to and stored in memory 16 (thereby storing for example in a table memory per certain coupling and/or per certain user coupling information like one or more parts of said first code together with one or more parts of said second code like a call-on-hold indicator) and which second code via mmi 15 and connection 65 is supplied to coder 14. Said second code is coded and via transceiver 13 and connection 31 supplied to switch 4. In switch 4, the second code flows via coupler 44 to detector 42 via connection 81 for detection purposes and to memory 45 via connection 84 for storage purposes, all under control of processor 41, both possibly after a decoding process. In response to detection, the visiting of said internet website via connection 37 is interrupted, and at least a part of said second code, possibly after a coding process, is sent via coupler 44 and for example connection 39 to an intranet for getting company information. As a result, said user is visiting an intranet site defined by (a part of) said second code.

Then said user decides to return to said internet website. Thereto, via mmi 15, user actions (one or more mouse clicks and/or one or more key signals) are converted into instructions which, possibly via connection 63, processor 11 and connection 64, are supplied to terminal-generator 17. In response, terminal-generator 17 generates a third code (for example indicating to reverse said call-on-hold situation) which third code via memory 16 is provided with at least a part of said coupling information. Said third code then is supplied via mmi 15 and connection 65 to coder 14. Said third code is coded and via transceiver 13 and connection 31 supplied to switch 4. In switch 4, the third code flows via coupler 44 to detector 42 via connection 81 for detection purposes and to memory 45 via connection 84 for storage purposes, all under control of processor 41, both possibly after a decoding process. In response to detection, the visiting of said intranet site via connection 39 is interrupted and/or finished, and at least a part of said coupling information, possibly after a coding process, is sent via coupler 44 and for example connection 37 to said internet for surfing purposes. As a result, said user has returned to visiting said website (defined by (a part of) said first code).

According to a third alternative to said first embodiment, in addition to said first codes and/or to said second codes and/or to said third codes, at least one fourth code is generated, via user actions and/or automatically, for example comprising a pin code and/or in repsonse to a finger print detection or voice recognition etc. for security reasons, like checking the identity and/or authority of the user etc.

According to a second embodiment, a user operating terminal 1 decides to go surfing the web. Thereto, via mmi 15, user actions (one or more mouse clicks and/or one or more key signals) are converted into instructions which, possibly via connection 63, processor 11 and connection 64, are supplied to terminal-generator 17. In response, terminal-generator 17 generates a first code (for example comprising a telephone number and an access number and a service number) which via mmi 15 and connection 65 is supplied to coder 14. Said first code is coded and via transceiver 13 and connection 31 supplied to switch 4. In switch 4, the first code flows via coupler 44 to detector 42 via connection 81 for detection purposes and to memory 45 via connection 84 for storage purposes (thereby storing for example in a table memory per certain coupling and/or per certain user and/or per certain terminal coupling information like one or more parts of said first code), all under control of processor 41, both possibly after a decoding process. In response to detection, at least a part of said first code, possibly after a coding process, is sent via coupler 44 and for example connection 37 to an internet for surfing purposes. As a result, said user is visiting a website defined by (a part of) said first code.

In response to further user actions, via mmi 15, (one or more further mouse clicks and/or one or more further key signals), further instructions are supplied to terminal-generator 17. In response, terminal-generator 17 generates further first codes (for example further service numbers) which via mmi 15 and connection 65 are supplied to coder 14. Said further first codes are coded and via transceiver 13 and connection 31 supplied to switch 4. In switch 4, the further first codes flow via coupler 44 to detector 42 via connection 81 for detection purposes and to memory 45 via connection 84 for storage purposes (thereby storing for example in a table memory per certain coupling and/or per certain user and/or per certain terminal further coupling information like one or more parts of said further first codes), all under control of processor 41, both possibly after a decoding process. In response to detection, at least parts of said further first codes, possibly after a coding process, are sent via coupler 44 and for example connection 37 to said internet for surfing purposes. As a result, said user is visiting further websites defined by (parts of) said further first codes.

Then said user decides to finish this internet session, thereby realising that later said user will wish to return to for example the further internet website visited lastly. Thereto, via mmi 15, user actions (one or more mouse clicks and/or one or more key signals) are converted into instructions which, possibly via connection 63, processor 11 and connection 64, are supplied to terminal-generator 17. In response, terminal-generator 17 generates a second code (for example indicating a session-park situation) which via mmi 15 and connection 65 is supplied to coder 14. Said second code is coded and via transceiver 13 and connection 31 supplied to switch 4. In switch 4, the second code flows via coupler 44 to detector 42 via connection 81 for detection purposes and to memory 45 via connection 84 for storage purposes (thereby storing for example in a table memory per certain user and/or per certain terminal (further) coupling information like one or more parts of said (further) first code(s) together with one or more parts of said second code like a session-park indicator), all under control of processor 41, both possibly after a decoding process. In response to detection, the visiting of said internet website via connection 37 is finished. As a result, said user is no longer visiting (further) websites, with coupling information being stored defining (at least a part of) the last websites.

Then said user decides to return to for example said last internet website. Thereto, via mmi 15, user actions (one or more mouse clicks and/or one or more key signals) are converted into instructions which, possibly via connection 63, processor 11 and connection 64, are supplied to terminal-generator 17. In response, terminal-generator 17 generates a third code (for example indicating to continue said session-park situation) which via mmi 15 and connection 65 is supplied to coder 14. Said third code is coded and via transceiver 13 and connection 31 supplied to switch 4. In switch 4, the third code flows via coupler 44 to detector 42 via connection 81 for detection purposes and to memory 45 via connection 84 for storage purposes, all under control of processor 41, both possibly after a decoding process. In response to detection, at least a part of said further coupling information, possibly after a coding process, is sent via coupler 44 and for example connection 37 to said internet for surfing purposes. As a result, said user has continued to visiting said last website, thereby using the session-park feature.

According to a first alternative to said second embodiment, said third code is generated via said mobile terminal 2.

According to a second alternative to said second embodiment, storage is done via said memory 16.

According to a third alternative to said second embodiment, said fourth code is generated, in addition to said first codes and/or to said second codes and/or to said third codes.

All embodiments are just embodiments and do not exclude other embodiments not shown and/or described. All alternatives are just alternatives and do not exclude other alternatives not shown and/or described. Each (part of an) embodiment and/or each (part of an) alternative can be combined with any other (part of an) embodiment and/or any other (part of an) alternative. Terms like "in response to K" and "in dependence of L" and "for doing M" do not exclude that there could be a further "in response to N" and a further "in dependence of O" and a further "for doing P" etc.

Each one of said codes, instead of sometimes comprising many subcodes (like said first code for example comprising a telephone number and an access number and a service number; and like said second code for example comprising a deactivation-subcode indicating a call-on-hold situation and possibly for example further comprising a further access number and a further service number, or for example comprising a deactivation-subcode indicating a session-park situation), can of course be replaced by one or more of said subcodes (for example in response to one or more user actions). Said second code, however, will always at least comprise a deactivation-indication, preferably a deactivation-type.

Each one of said terminals 1 and 2 may be a wired terminal, a wireless terminal (cordless, mobile etc.) etc. in the form of a communication apparatus (telephone, screenphone etc.) and/or an information apparatus (pc, etc.) etc. Said network-entity may be a switch, a router, a bridge or a base station etc. Said terminals and/or network-entities may form part of a public network, a private network, a LAN etc. and further network-entities not shown are not to be excluded. Each connection between terminals and/or network-entities may be circuit switched and/or packet switched. Each one of said codes may comprise an identifier for identifying a terminal and/or a user and/or a network-entity, and/or may be accompanied by such an identifier, and/or may be linked to an identifier due to a predefined wired connection being used and/or a predefined timeslot being used and/or a predefined channel being used etc. Each numbered block shown in figure 1 forms part of a larger group of blocks, always comprising an unnumbered block, to indicate that each block may be 100% hardware, or 100% software, or a mixture of both, with an unnumbered block defining a kind of an interface function. Each two or more blocks can be integrated into a new larger block, and each block can be cut into separate smaller blocks, independently of whether a block comprises hardware or software and independently of a function of such a block.

## Claims

1. System comprising a terminal and a network-entity for coupling said terminal to an int(e)r(a)net, which terminal comprises a terminal-generator for generating a first code for activating a coupling to said int(e)r(a)net via said network-entity, which system comprises a system-generator for generating a second code for deactivating at least a part of said coupling, and which network-entity comprises a detector for detecting said first code and said second code, **characterised in that** said system comprises a memory to be coupled to said detector for storing coupling-information in relation to at least a part of said second code and for generating at least a part of said coupling-information in response to at least a third code.

2. System according to claim 1, **characterised in that** said second code comprises a subcode indicating a deactivation-type.

3. System according to claim 1 or 2, **characterised in that** in addition to at least one of said first and third codes a fourth code is generated for security reasons.

4. Terminal for use in a system comprising said terminal and a network-entity for coupling said terminal to an int(e)r(a)net, which terminal comprises a terminal-generator for generating a first code for activating a coupling to said int(e)r(a)net via said network-entity, which system comprises a system-generator for generating a second code for deactivating at least a part of said coupling, and which network-entity comprises a detector for detecting said first code and said second code, **characterised in that** said terminal comprises a memory for storing coupling-information in relation to at least a part of said second code and for generating at least a part of said coupling-information in response to at least a third code.

5. Terminal according to claim 4, **characterised in that** said second code comprises a subcode indicating a deactivation-type.

6. Terminal according to claim 4 or 5, **characterised in that** in addition to at least one of said first and third codes a fourth code is generated for security reasons.

7. Network-entity for use in a system comprising a terminal and said network-entity for coupling said terminal to an int(e)r(a)net, which terminal comprises a generator for generating a first code for activating a coupling to said int(e)r(a)net via said network-entity, which system comprises a system-generator for generating a second code for deactivating at least a part of said coupling, and which network-entity comprises a detector for detecting said first code and said second code, **characterised in that** said network-entity comprises a memory for storing coupling-information in relation to at least a part of said second code and for generating at least a part of said coupling-information in response to at least a third code.

8. Network-entity according to claim 7, **characterised in that** said second code comprises a subcode indicating a deactivation-type.

9. Network-entity according to claim 7 or 8, **characterised in that** in addition to at least one of said first and third codes a fourth code is generated for security reasons.

10. Method for coupling a terminal via a network-entity to an int(e)r(a)net, which method comprises the steps of generating a first code for activating a coupling from said terminal via said network-entity to said int(e)r(a)net and of generating a second code for deactivating at least a part of said coupling and of detecting said first code and said second code, **characterised in that** said method comprises the further steps of storing coupling-information in relation to at least a part of said second code and of generating at least a part of said coupling-information in response to at least a third code.
